# FASCICULE DE BREVET EUROPEEN

(11) **EP 4 580 948 B1**
(45) Date de publication et mention de la délivrance du brevet: **15.10.2025**
(21) Numéro de dépôt: 23817788.5
(22) Date de dépôt: 11.12.2023
(51) Int. Cl.: B64G 1/42, B64G 1/50, H02G 3/03, H02G 3/32

(54) **ARRANGEMENT DE CÂBLE ÉLECTRIQUE COMPRENANT AU MOINS UN ORGANE DE PINCEMENT DU CÂBLE**
STROMKABELANORDNUNG MIT MINDESTENS EINEM KABELKLEMMELEMENT
ELECTRICAL CABLE ARRANGEMENT COMPRISING AT LEAST ONE CABLE PINCHING MEMBER

(30) Priorité: 13.12.2022 FR 2213246
(43) Date de publication de la demande: 09.07.2025
(73) Titulaire: Airbus Defence and Space SAS, 31402 Toulouse Cedex 4 (FR)
(72) Inventeur: WALKER, Andrew, 31402 Toulouse cedex 4 (FR)
(74) Mandataire: Ipside
(86) Numéro de dépôt international: PCT/EP2023/085215
(87) Numéro de publication internationale: WO 2024/126424

(56) Documents cités:
- EP-A1- 2 439 750
- EP-A1- 3 633 690
- WO-A1-96/08063
- DE-A1- 102018 000 284
- JP-A- H05 211 712
- US-A1- 2010 122 836
- US-A1- 2020 328 134
- US-A1- 2021 063 069
- US-A1- 2022 337 039

## Description

### DOMAINE TECHNIQUE DE L'INVENTION

Le domaine de l'invention est celui des câbles électriques et arrangements de câbles électriques dans les applications spatiales.

Plus précisément, l'invention concerne un arrangement de câble électrique comprenant au moins un organe de pincement du câble.

### ÉTAT DE LA TECHNIQUE

Il est connu de l'art antérieur, un câble électrique terrestre du type comprenant une gaine formant une enveloppe extérieure et comprenant une pluralité de conducteurs longilignes disposés dans la gaine extérieure, à l'intérieur du câble. Les conducteurs longilignes comprennent par exemple des âmes métalliques électriquement isolées au moyen de gaines les entourant. La gaine extérieure du câble peut être conductrice électriquement, par exemple pour former un blindage du câble ou elle peut être électriquement isolante. D'autres éléments, notamment des éléments électriquement isolants tels que d'autres gaines internes électriquement isolantes, peuvent également être disposés dans la gaine extérieure.

Les câbles électriques nécessitent généralement peu d'évacuation de chaleur.

Toutefois de nouvelles utilisations, comme par exemple pour des propulseurs plasmiques, impliquant de forts ampérages à des fréquences élevées, aux alentours par exemple de 1MHz, font apparaître le besoin de modifier l'arrangement d'alimentation électrique pour pouvoir gérer de nouveaux besoins de forte évacuation de l'énergie calorifique générée dans le câble.

On connaît notamment le document brevet US 2021063069 A1 qui divulgue un arrangement d'un câble électrique, adapté à un environnement spatial, de type comprenant une gaine formant une enveloppe extérieure dudit câble et présentant un diamètre extérieur correspondant au diamètre du câble, et comprenant un organe de pincement du câble.

### EXPOSÉ DE L'INVENTION

La présente invention vise à fournir un arrangement de câble qui soit particulièrement simple à mettre en œuvre, et qui permette une évacuation de chaleur performante.

À cet effet, l'invention vise un arrangement d'au moins un câble électrique, adapté à un environnement spatial, ledit câble étant de type comprenant une gaine formant une enveloppe extérieure dudit câble et comprenant au moins une pluralité de conducteurs longilignes disposés dans la gaine, la gaine présentant un diamètre extérieur correspondant au diamètre du câble, l'arrangement de câble comprenant au moins un organe de pincement du câble, comprenant un ressort configuré pour exercer, au moins une force de pincement sur la gaine en au moins deux zones de pincement de la gaine pour serrer transversalement les conducteurs longilignes et la gaine, la force de pincement étant déterminée pour créer, au niveau de chaque organe de pincement, une déformation de la section du câble créant des ponts par conduction thermique reliant de façon directe les conducteurs longilignes et une surface externe de la gaine, évacuant ainsi de la chaleur produite par une circulation de courant électrique dans ledit câble.

Dans l'agencement de câble selon l'invention, le ou les organes de pincement remplissent de façon permanente, c'est-à-dire à tout moment de l'utilisation de l'arrangement de câble, une fonction de pincement et de déformation du câble. Par exemple, lorsque l'arrangement de câble est utilisé dans un engin spatial, chaque organe de pincement pince le câble à tout moment de la durée de vie de l'engin spatial, et notamment lorsque l'engin spatial est dans l'espace extra-atmosphérique.

On entend par « pincement » le fait que l'organe de pincement exerce un effort sur le câble de façon à modifier l'agencement interne du câble dans lequel ses composants sont plaqués localement les uns contre les autres. Le pincement est par exemple exercé par l'organe de pincement en deux zones de pincement distinctes sur le câble. Les zones de pincement sont par exemple disposées de façon à ce que la force de pincement exercée par l'organe de pincement provoque localement une déformation créant des ponts thermiques par conduction selon des lignes radiales depuis les conducteurs vers la gaine extérieure. La surface externe de la gaine électriquement isolante autour de chacun des conducteurs vient ainsi se rapprocher localement de la surface interne de la gaine extérieure pour faciliter les ponts thermiques au niveau de chaque zone de pincement. L'âme de chaque conducteur peut également être mobile dans sa gaine électriquement isolante et être plaquée contre cette dernière.

Ainsi, des ponts par conduction thermique sont réalisés localement et radialement au niveau de chaque organe de pincement. Ces ponts sont dirigés sensiblement radialement depuis l'intérieur du câble, c'est-à-dire par exemple depuis les âmes des conducteurs vers chacune des zones de pincement sur la surface externe de la gaine du câble. La chaleur transmise par conduction jusqu'à la surface externe de la gaine, peut ensuite être diffusée par exemple par convexion et par radiation. Le pont thermique forme par exemple un chemin de conduction thermique direct allant du centre du conducteur jusqu'à un organe de pincement, grâce à la force de pincement. Un tel chemin de conduction thermique direct permet d'évacuer efficacement de la chaleur depuis l'intérieur du câble.

La chaleur est par exemple également transmise par conduction entre la surface externe de la gaine et les zones d'appui avec les organes de pincement qui à leur tour diffusent par exemple la chaleur par convexion et par radiation depuis leur surface externe.

La chaleur produite à l'intérieur du câble, sous l'effet d'un courant électrique traversant le câble, peut ainsi être évacuée efficacement depuis l'intérieur du câble jusqu'à la surface externe de la gaine voire même vers l'organe de pincement, pour évacuer la chaleur dans l'environnement du câble. En particulier, lorsqu'un courant électrique de plusieurs ampères ou de plusieurs dizaines d'ampères, transite à haute fréquence dans le câble, par exemple à une fréquence supérieure à 10⁶Hz, les pertes électriques sont élevées, ce qui nécessite une forte évacuation de chaleur pour ne pas détériorer le câble.

Avantageusement le besoin d'évacuation de la chaleur peut être réglé en multipliant le nombre d'organes de pincement.

Avantageusement encore tout type de câble peut être utilisé et adapté, sans avoir à modifier le câble, les organes de pincement venant simplement se positionner, en complément, sur la surface externe de la gaine. Ainsi une fonction d'évacuation, par le câble, de la chaleur produite par le câble, propre aux exigences d'une mission, n'est plus nécessairement dépendante uniquement du câble utilisé.

L'organe de pincement peut avantageusement jouer un rôle de radiateur, en offrant une surface additionnelle de rayonnement de la chaleur du câble qui peut s'avérer critique dans l'environnement spatial dépourvu d'air.

L'organe de pincement exerce une fonction distincte du maintien, même si on pourrait envisager un organe cumulant les deux fonctions. Le maintien est par exemple réalisé par un collier de serrage ou une boucle de maintien. L'organe de maintien exerce par exemple une pression nulle ou minime sur le câble. Dans le cas d'un organe de maintien, on ne vise pas en effet à déformer une section du câble pour modifier son agencement interne. Une pression uniforme sur la surface externe est par exemple appliquée par l'organe de maintien. On peut donc distinguer une action de maintien d'une action de pincement. Ainsi, les organes de pincement peuvent être disposés en nombre adéquat et aux positions adéquates pour obtenir une évacuation de la chaleur performante, tandis que les organes de maintien peuvent être disposés en nombre adéquat et aux positions adéquates pour obtenir un maintien mécanique. En outre, pour un moteur plasmique par exemple, un câble d'alimentation électrique doit présenter une certaine mobilité pour permettre une orientation du moteur.

Par ailleurs, cette séparation des fonctions de pincement et de maintien facilite la conception et permet ainsi de concevoir l'organe de pincement de manière à favoriser l'évacuation de la chaleur, c'est-à-dire le refroidissement du câble, en fonction des besoins de la mission, tandis que l'organe de maintien peut être conçu de manière à favoriser un maintien selon les besoins de la mission.

Il est toutefois également possible que l'organe de pincement et l'organe de maintien soient formés par un même organe de pincement et de maintien.

Les zones de pincement sont par exemple sensiblement transversalement opposées sur le câble. Lorsque le câble est de section sensiblement circulaire, les zones de pincement peuvent être par exemple diamétralement opposées sur le câble.

Lorsque l'engin spatial atteint l'espace extra-atmosphérique, le câble n'étant pas dans un environnement pressurisé, les particules d'air présentes initialement à l'intérieur du câble, sont évacuées et remplacées, par exemple après quelques minutes, par du vide. Les organes de pincement sont alors d'autant plus importants que l'évacuation de l'énergie générée à l'intérieur du câble nécessite une conduction thermique.

Le ressort joue un rôle important, notamment pour des câbles, pouvant être en mouvement, en ce qu'il permet d'appliquer une pression tout au long de la durée d'utilisation et de réduire la sensibilité à des glissements du câble ou des mouvements de l'aménagement intérieur dans la gaine d'isolation. En effet un tel câble électrique de puissance peut être installé sur un harnais d'alimentation d'un propulseur électrique.

Selon une particularité de l'invention, chaque conducteur longiligne comprend une âme électriquement conductrice et électriquement isolée par une gaine électriquement isolante propre à chaque conducteur.

Selon une autre particularité, l'arrangement de câble selon l'invention comprend en outre au moins un organe de maintien du câble configuré pour maintenir le câble par rapport à un élément de structure d'un engin spatial, au moins temporairement au moment d'un lancement de l'engin spatial, chaque organe de pincement étant distinct dudit organe de maintien, l'organe de maintien étant configuré pour exercer, sur le câble, hors phase de lancement, un effort de compression nul ou inférieur à un effort de compression négligeable déterminé ne causant pas de déformation de la section du câble.

Selon une autre particularité de l'invention, chaque organe de pincement est fixé, par une liaison mécanique, audit câble exclusivement.

Selon une autre particularité de l'invention, chaque organe de pincement est relié à une tresse thermique souple d'évacuation de la chaleur.

Selon une autre particularité de l'invention, chaque organe de pincement exerce ladite force de pincement en deux zones de pincement transversalement opposés sur ledit câble.

Selon une autre particularité de l'invention, chaque organe de pincement comprend au moins deux bras venant en appui sur la gaine au niveau desdites zones de pincement, et un élément élastique de rappel exerçant un effort de rappel sur les bras pour qu'ils exercent ladite force de pincement.

Selon une autre particularité de l'invention, l'au moins un organe de pincement comprend une surface formant radiateur thermique.

Selon une autre particularité de l'invention, la surface formant radiateur thermique comporte un réflecteur optique solaire.

Selon une autre particularité de l'invention, l'au moins un organe de pincement est revêtu d'un revêtement possédant une émissivité déterminée.

Selon une autre particularité de l'invention, l'émissivité du revêtement de l'organe de pincement est supérieure à l'émissivité de la surface externe de la gaine.

Selon une autre particularité de l'invention, l'émissivité du revêtement de l'organe de pincement est supérieure ou égale à 0.5, et préférentiellement supérieure ou égale à 0.8.

Selon une autre particularité de l'invention, le revêtement est réalisé à partir d'une peinture et/ou un traitement de surface.

Selon une autre particularité de l'invention, chaque organe de pincement en appui sur la gaine du câble, s'étend, selon la direction longitudinale du câble, sur une longueur comprise entre 1 et 3 fois le diamètre du câble.

Selon une autre particularité de l'invention, l'arrangement comprend une pluralité d'organes de pincement montés sur le câble.

Selon une autre particularité de l'invention, les organes de pincement sont séparés les uns des autres d'une distance, prise le long dudit câble, comprise entre 6 et 10 fois le diamètre du câble.

L'invention a également pour objet un engin spatial comportant au moins un arrangement de câble selon l'invention.

Le maintien du câble par rapport à un élément de structure de l'engin spatial est réalisé au moins lors du lancement. Le pincement du câble est réalisé au moins lorsque l'engin spatial est dans l'espace extra-atmosphérique.

### BRÈVE DESCRIPTION DES FIGURES

L'invention sera bien comprise et ses avantages apparaitront mieux à la lecture de la description détaillée qui suit, donnée à titre indicatif et nullement limitatif, en référence aux dessins annexés illustrant des exemples de réalisation.
La figure 1 représente un exemple d'engin spatial comprenant un arrangement de câble selon l'invention.
La figure 2 représente un exemple de câble utilisé dans un arrangement de câble selon l'invention.
La figure 3 est une vue en coupe du câble de la figure 2 montrant les points de contacts internes sans le pincement selon l'invention.
La figure 4 est une vue en coupe du câble de la figure 2 sur lequel est placé un organe de pincement selon un exemple de réalisation, et montrant des points de contacts internes formant des ponts thermiques radiaux.
La figure 5 est une vue similaire à celle de la figure 4, qui montre en particulier des zones de pincement sur le câble.
La figure 6 montre un exemple d'arrangement de câble avec trois organes de pincement placé sur un câble.
La figure 7 est une vue en coupe du câble de la figure 2 sur lequel est placé un organe de pincement selon un exemple de réalisation, et montrant des points de contacts internes formant des ponts thermiques radiaux.
La figure 8 montre un exemple d'arrangement de câble avec trois organes de pincement selon un exemple de réalisation.
La figure 9 montre une vue schématique en coupe d'un exemple d'organe de pincement et de maintien selon un exemple de réalisation.
La figure 10 montre, selon une vue en coupe, un autre exemple de câble pouvant être utilisé dans un arrangement de câble selon l'invention.

### DESCRIPTION DÉTAILLÉE DE L'INVENTION

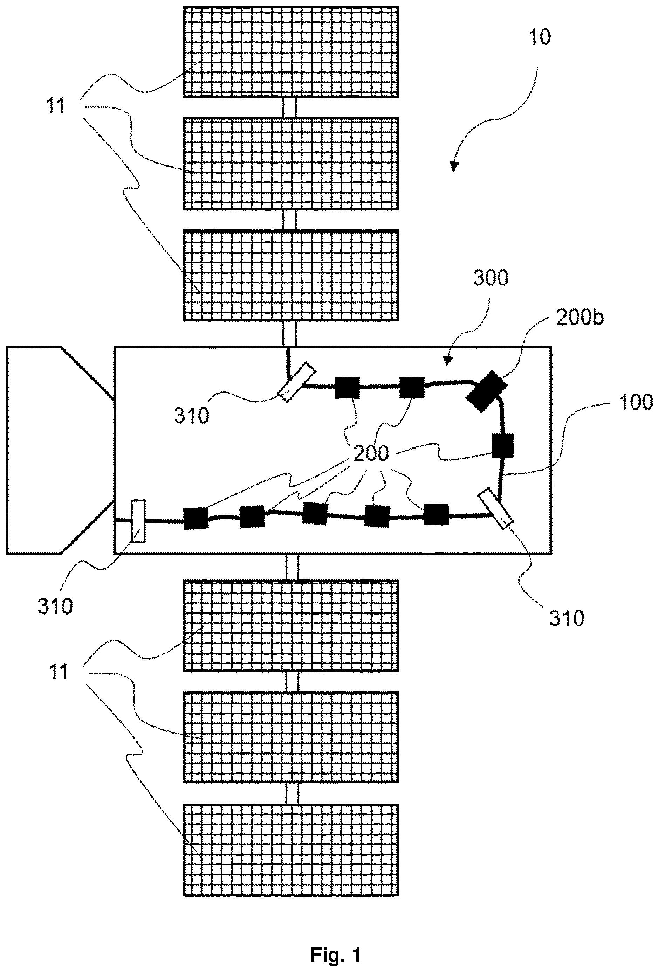

La figure 1 représente un engin spatial 10, qui se présente par exemple sous la forme d'un satellite artificiel. Un tel satellite peut par exemple être un satellite de télécommunication. L'engin spatial peut également se présenter sous la forme d'une sonde spatiale interplanétaire. L'engin spatial comprend par exemple un propulseur plasmique alimenté en énergie électrique par des câbles selon l'invention. Le propulseur plasmique sera par exemple orienté par rapport au bâti de l'engin spatial, au cours de son utilisation, nécessitant une mobilité des câbles d'alimentation électrique par rapport au bâti de l'engin spatial. L'engin spatial 10 comprend ainsi des équipements électriques ou électroniques, qui sont reliés entre eux par des câbles électriques. Ici, par exemple, l'engin spatial 10 comprend des panneaux 11 de cellules solaires destinés à fournir de l'énergie électrique à l'engin spatial. Dans l'exemple illustré, l'engin spatial 10 comprend notamment un câble 100 reliant la batterie de stockage de l'énergie électrique à un groupe de panneaux 11 solaires ou à des équipements de l'engin spatial 10.

Le câble 100 selon l'invention peut être disposé sous une feuille de protection de type MLI (Multi Layer Insulation) ou SLI (Single Layer Insulation). Le câble selon l'invention peut également être disposé à l'extérieur de l'engin spatial. On prévoira par exemple des écrans de protection du câble contre les rayonnements du soleil ou contre des rayonnements thermiques d'un moteur plasmique.

Le câble est par exemple maintenu sur l'engin spatial 10 au moyen d'organes de maintien 310, qui maintiennent au moins temporairement, lors des phases de lancement, le câble 100 par rapport à un élément de structure de l'engin spatial 10. Les organes de maintien peuvent également jouer le rôle de maintien d'un câble à l'intérieur d'un volume déterminé, par exemple pour l'alimentation d'un moteur plasmique.

Les organes de maintien 310 sont par exemple configurés pour maintenir le câble 100 par rapport à un élément de structure de l'engin spatial 10 lors du passage d'un premier état, dans lequel l'engin spatial 10 stationne à la surface terrestre, par exemple avant le décollage, et un deuxième état, dans lequel l'engin spatial 10 évolue dans l'espace, par exemple en orbite autour de la Terre. En d'autres termes, les organes de maintien 310 exercent par exemple, au moins temporairement, une force de maintien du câble 100 sur ou dans l'élément de structure de l'engin spatial 10.

En outre, l'engin spatial 10 comprend un ou plusieurs organes de pincement 200 d'au moins un câble 100. Lorsque le câble 100 est traversé par un courant électrique de plusieurs ampères ou plusieurs dizaines d'ampères, par exemple pour un moteur plasmique, à une fréquence de 1MHz, la chaleur générée par la résistance électrique du câble augmente. Chaque organe de pincement 200 est configuré pour permettre d'évacuer de manière efficace la chaleur depuis l'intérieur du câble 100 vers la surface externe de la gaine extérieure du câble. L'efficacité du pincement a notamment été testée sous vide, en laboratoire. L'efficacité d'évacuation de la chaleur est par exemple améliorée localement d'un facteur 10 voire d'un facteur 100, selon les types de câbles et selon les efforts de pincement appliqués.

A cet effet, les organes de pincement 200 sont par exemple configurés pour exercer, de manière permanente, une force de pincement sur le câble 100 et provoquer une déformation locale de la section du câble.

Les organes de pincement 200 sont par exemple configurés pour serrer le câble 100 en au moins deux zones de pincement dans le premier état, dans lequel l'engin spatial 10 stationne à la surface terrestre, lors du passage du premier état vers le deuxième état, et dans le deuxième état, dans lequel l'engin spatial 10 évolue dans l'espace extra-atmosphérique. Ainsi, les organes de pincement 200 serrent par exemple le câble 100 de manière permanente, c'est-à-dire pendant toute la durée de vie de l'engin spatial 10.

Les organes de pincement 200 peuvent en outre eux-mêmes réaliser une évacuation de chaleur provenant du câble et transmise aux organes de pincement pour être ensuite évacuée par convexion ou par radiation voire par conduction vers une partie structurelle de l'engin spatial.

Tel que cela est représenté sur la figure 1, les organes de maintien 310 et les organes de pincement 200 peuvent, par exemple, être distincts.

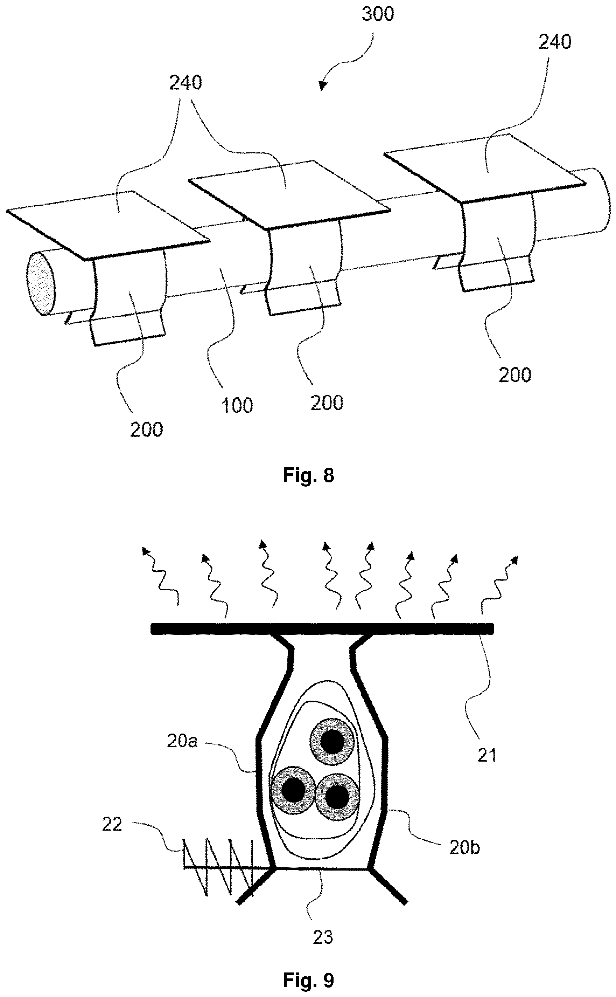

Tel que cela est également représenté sur la figure 1, un organe de maintien et un organe de pincement peuvent par exemple être réalisés par un même organe 200b de pincement et de maintien. L'organe 200b de pincement et de maintien exerce au moins temporairement une force de maintien sur le câble 100, et de manière permanente une force de pincement sur le câble 100. Un exemple d'organe de maintien et de pincement est par exemple illustré à la figure 9.

Le câble 100, le ou les organes de pincement 200 forment ensemble un arrangement 300 de câble. La configuration et le positionnement de l'arrangement 300 de câble sur l'engin spatial 10 peuvent varier selon les besoins de la mission.

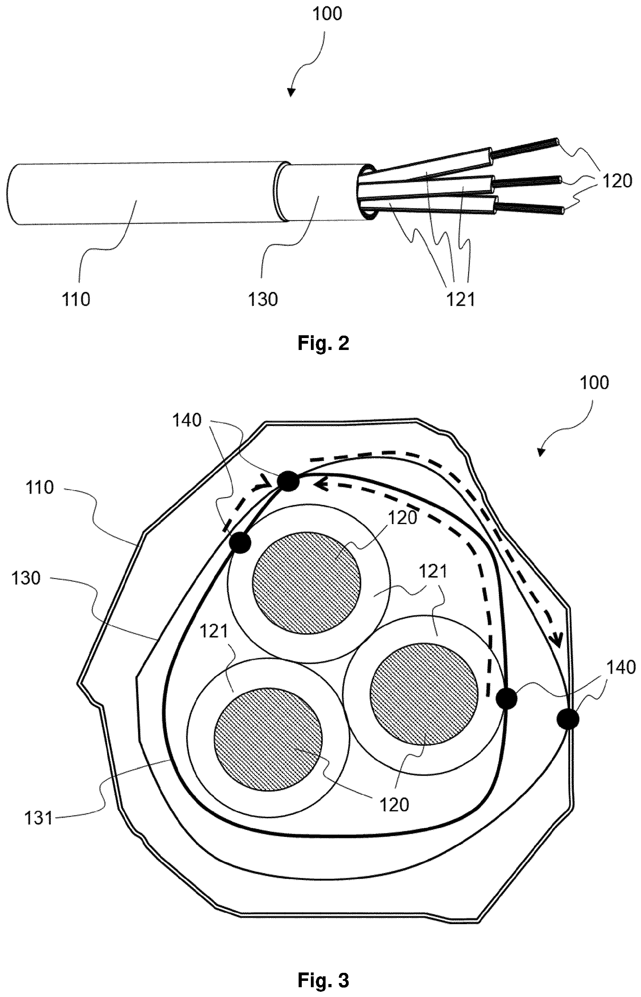

La figure 2 illustre le câble électrique 100 selon un exemple de réalisation.

Le câble électrique 100 comprend par exemple une gaine extérieure 110 formant l'enveloppe externe du câble 100.

Le câble électrique 100 comprend par exemple un ou plusieurs conducteurs 120 électriques longilignes. Les conducteurs 120 longilignes peuvent par exemple se présenter sous la forme de câbles métalliques enrobés de matériau électriquement isolant 121. Les conducteurs 120 sont disposés à l'intérieur de la gaine extérieure 110 qui les entoure, c'est-à-dire à l'intérieur du câble 100.

Le câble peut par exemple comprendre des gaines internes additionnelles, notamment des gaines électriquement isolantes, par exemple en fibre de verre, qui peuvent être disposées entre la gaine extérieure 110 et les conducteurs 120. La gaine extérieure 110 est par exemple réalisée dans un matériau diélectrique tel que le PTFE.

Le câble 100 peut par exemple comprendre une gaine extérieure 110 de blindage, disposée autour d'une gaine 130 par exemple en polytétrafluoroéthylène (PTFE) venant elle-même autour des conducteurs 120. Le blindage peut par exemple avoir une fonction de blindage électromagnétique et/ou une fonction de blindage mécanique. La gaine extérieure de blindage est par exemple réalisée dans un matériau métallique, mais conserve toutefois un caractère flexible.

Le câble 100 est soumis à un échauffement thermique lorsqu'un courant électrique le traverse, du fait de la résistance électrique du câble. L'échauffement est en particulier croissant avec l'intensité et la fréquence du signal électrique qui le traverse. Les courants sont par exemple de quelques ampères voire quelques dizaines d'ampères. L'échauffement par la résistance électrique du câble est alors particulièrement problématique pour des fréquences dépassant 100 kHz. L'invention pourrait également s'appliquer pour des courants de l'ordre de quelques milliampères pour des câbles de petits diamètres permettant par exemple une réduction de masse.

Afin d'évacuer la chaleur produite à l'intérieur du câble 100, l'arrangement 300 de câble comprend en outre au moins un organe de pincement 200 du câble 100.

L'organe de pincement 200 permet ainsi d'évacuer efficacement la chaleur depuis l'intérieur du câble 100 vers sa surface externe, voire même via l'organe de pincement 200. L'évacuation de la chaleur depuis l'intérieur du câble 100 vers son environnement est ainsi grandement améliorée en comparaison avec un câble 100 dépourvu d'organe de pincement 200.

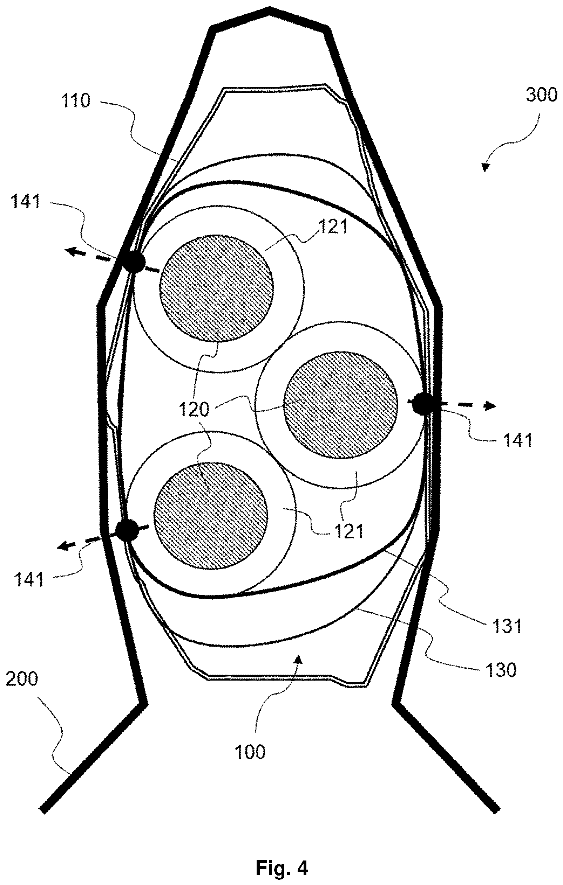

La figure 3 montre une vue en coupe du câble 100, dépourvu d'organe de pincement 200, et la figure 4 montre une vue en coupe du câble 100 muni d'un organe de pincement 200.

Ici, le câble 100 représenté sur les figures 3 et 4 comprend deux gaines internes 130 et 131, disposée entre la gaine extérieure 110 et les conducteurs 120.

Tel que représenté sur la figure 3, dans le câble 100 dépourvu d'organe de pincement 200, on peut voir la gaine extérieure 110 entourant la première gaine interne 130 elle-même entourant la deuxième gaine interne 131, cette dernière étant disposée autour des conducteurs 120. Les conducteurs comprennent chacun une âme conductrice entourée par une gaine électriquement isolante 121. Comme illustré les points de contacts 140 internes sont répartis aléatoirement au niveau des surfaces internes et externes des gaines.

Ainsi, de la chaleur produite au niveau des conducteurs 120 ne peut être évacuée par conduction vers l'extérieur du câble qu'en empruntant le chemin thermique, passant par ces points de contacts 140 internes, qui suit des portions significatives à l'intérieur des différentes gaines intérieures pour joindre deux points de contact successifs.

Comme représenté à la figure 4, dans la portion du câble 100 munie d'un organe de pincement 200, la gaine extérieure 110, les gaines internes 130 et 131, ainsi que les conducteurs 120, sont en contact les uns avec les autres au niveau de points de contact 141 internes situés en vis-à-vis les uns des autres. Ainsi chaque pont thermique, utilisant la conduction thermique, ne fait que traverser l'épaisseur de chaque gaine. On peut aussi envisager que l'âme conductrice de chaque conducteur 120 vienne contre sa gaine diélectrique 121.

Ainsi, le chemin thermique où la câble est pincé, représenté sur la figure 4 en chemin fléché en pointillés, est considérablement raccourci et direct en comparaison avec le chemin thermique de la figure 3, où le câble n'est pas pincé. En d'autres termes, le chemin thermique passant par les points de contacts 141 internes est beaucoup plus court lorsque le câble 100 est muni de l'organe de pincement 200.

Dans certaines configurations, le chemin thermique peut être par exemple orienté selon une direction radiale du câble 100.

On précise ici qu'en particulier dans un arrangement 300 de câble utilisé dans un engin spatial, la chaleur générée par la résistance électrique du câble, dans l'âme des conducteurs, est évacuée par conduction. En effet, en l'absence d'air dans le câble, lorsque l'engin spatial quitte l'atmosphère, l'évacuation par convection est alors sensiblement nulle, et l'évacuation par radiation est alors faible à l'intérieur du câble 100.

L'organe de pincement 200 est par exemple configuré pour exercer, de manière permanente, une force de pincement F sur le câble 100, en au moins deux zones de pincement 150 du câble 100.

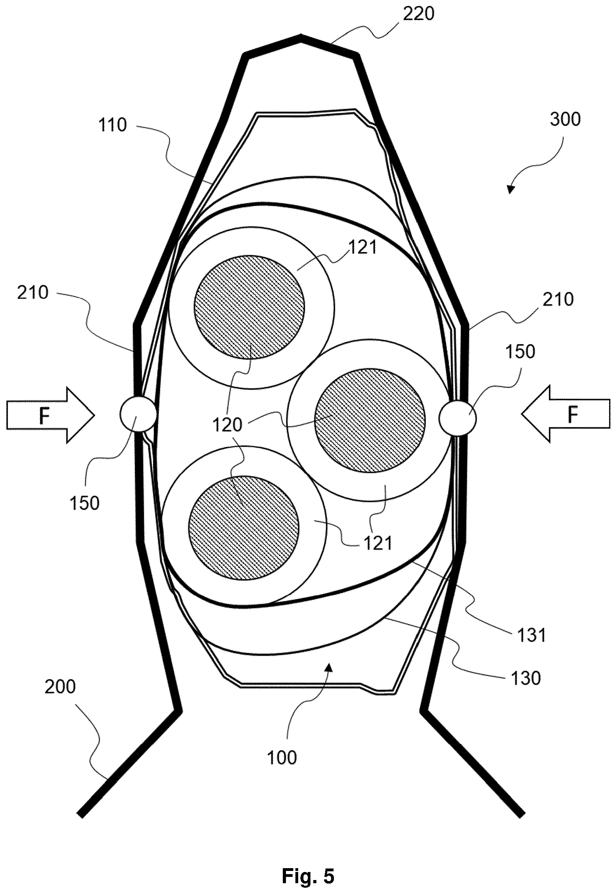

La figure 5 illustre par exemple la position de deux zones de pincement 150 sur le câble 100, qui sont situées à des positions transversalement opposées. Dans le cas d'un câble présentant une section circulaire, les deux zones de pincement sont par exemple radialement opposées.

De cette manière, l'organe de pincement 200 serre et déforme par exemple transversalement les conducteurs 120, la gaine extérieure 110 et les gaines intérieures 130 et 131.

La force de pincement F est par exemple exercée de manière permanente sur le câble 100, c'est-à-dire qu'au cours de l'utilisation de l'arrangement 300 de câble, l'organe de pincement 200 exerce la force de pincement F sans discontinuer.

Par exemple, dans le cadre d'une utilisation dans un engin spatial, l'organe de pincement 200 est configuré de sorte qu'il exerce la force de pincement F lors du décollage du lanceur de l'engin spatial, lors du trajet dans l'atmosphère puis dans l'espace, jusqu'à sa fin de vie.

De plus, la force de pincement F est telle qu'elle est par exemple constante à 20% près au cours du temps, c'est-à-dire qu'elle ne disparaît pas au cours du temps, comme pourrait le faire un effort de maintien utilisé spécifiquement pour la phase de lancement.

A cet effet, l'organe de pincement 200 peut, par exemple, être formé par un clip élastique, tel que cela est représenté sur les figures 4 à 6. Le clip élastique comprend par exemple un ressort de type lame. Le matériau du ressort de type lame sera choisi pour être résistant au fluage, c'est-à-dire capable de maintenir une pression contrôlée pendant une période de temps étendue, comme par exemple 15 ans pour un satellite de télécommunication.

Comme représenté à la figure 5, l'organe de pincement 200 comporte par exemple deux bras 210 et une base 220 reliant les bras 210. La base 220 est par exemple un élément de rappel qui tend à rapprocher les bras 210 l'un vers l'autre. L'effet de rappel est par exemple obtenu par l'élasticité du matériau dans lequel est réalisé l'organe de pincement 200. Il peut s'agir par exemple d'un matériau métallique comme de l'acier.

Ainsi, la base 220 jouant un rôle d'élément de rappel exerce par exemple indirectement la force de pincement F sur le câble 100, par l'intermédiaire des bras 210 qui viennent en appui contre le câble 100 au niveau des zones de pincement 150.

L'organe de pincement 200 peut être par exemple formé à partir d'une feuille de matériau, notamment métallique, pliée de façon à présenter une section en forme de clip, tel qu'illustré sur les figures 4 et 5.

En variante, les organes de pincement peuvent par exemple être réalisés, au moins en partie, dans un matériau diélectrique.

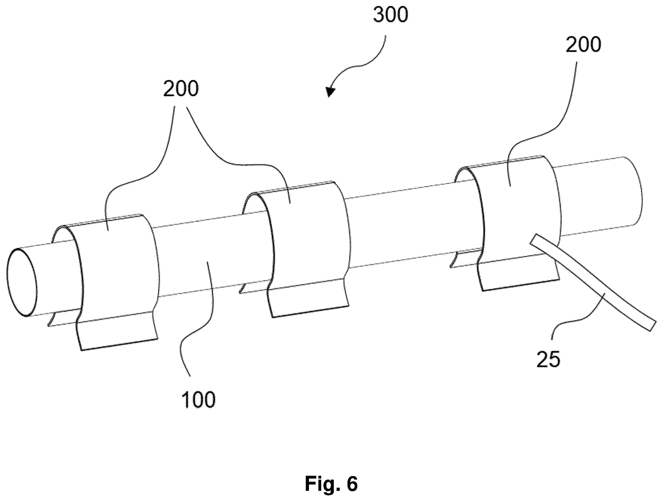

La figure 6 illustre un exemple d'arrangement 300 de câble avec trois organes de pincement 200. Comme cela est visible sur la figure 6, un organe de pincement 200 possède une largeur, c'est-à-dire une dimension dans la direction longitudinale du câble 100, correspondant par exemple à deux fois le diamètre du câble 100. En variante, la largeur de l'organe de pincement 200 peut être par exemple comprise entre une et trois fois le diamètre du câble 100. L'organe de pincement vient par exemple en contact linéaire avec la surface externe de la gaine extérieure du câble. La zone d'appui est par exemple sensiblement une ligne d'une largeur d'environ quelques centaines de micromètres voire de 1 mm ou de quelques millimètres.

On entend par diamètre du câble 100 un diamètre moyen du câble 100 sur sa longueur, dans un état non serré par un organe de pincement 200.

L'organe de pincement peut être par exemple fixé mécaniquement au câble uniquement. L'organe de pincement, fixé au câble, peut comprendre une tresse 25 souple thermiquement conductrice d'évacuation de la chaleur. Une telle tresse 25 souple ne gêne pas l'organe de pincement dans ses mouvements. La tresse est par exemple reliée par une de ses extrémités au bâti de l'engin spatial ou à un radiateur, pour une meilleure évacuation de la chaleur. La tresse souple est par exemple réalisée en cuivre.

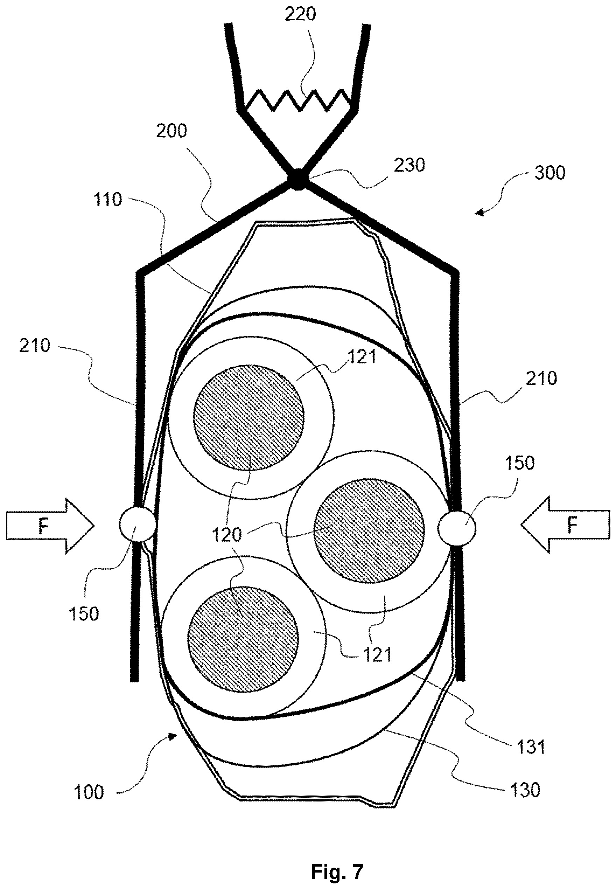

Tel que représenté à la figure 7, l'organe de pincement comporte par exemple deux bras 210, et une articulation 230 reliant les bras 210. L'organe de pincement 200 se présente ici sous la forme d'une pince.

Les bras 210 comportent par exemple chacun une première branche s'étendant d'un premier côté par rapport à l'articulation 230, et destinée à venir en appui contre le câble 100 pour le serrer. Par ailleurs, les bras 210 comportent chacun une deuxième branche s'étendant, à l'opposé, d'un second côté par rapport à l'articulation 230. L'organe de pincement 200 comprend en outre un élément de rappel 220 qui est ici par exemple un ressort hélicoïdal contraint en compression. Le ressort est par exemple réalisé en acier. L'élément de rappel 220 est agencé entre les deuxièmes branches des bras 210, de manière à écarter les deuxièmes branches en éloignement l'une de l'autre. De cette manière, les premières branches des bras 210 sont rapprochées l'une vers l'autre, de manière à pouvoir serrer le câble 100 se situant entre les premières branches des bras 210. Les bras comprennent par exemple de l'acier. Les bras peuvent aussi comprendre de l'aluminium ou du cuivre permettant une bonne conduction thermique. En variante, les bras peuvent aussi être réalisés dans un matériau diélectrique.

Quelle que soit la variante de réalisation, l'élément de rappel est par exemple configuré de sorte que la force de pincement exercée sur le câble 100 reste permanente dans le temps et varie peu en intensité. L'intensité est par exemple constante à +/- 20% par rapport à une valeur nominale.

Ceci peut notamment être obtenu par un ressort réalisé en acier. Un autre métal possédant un fluage faible et une relaxation de contrainte faible pourrait éventuellement être utilisé. Pour les bras, les métaux ayant une conductivité thermique élevée sont par exemple préférés.

De plus, l'élément de rappel est par exemple configuré de sorte que la force de pincement exercée sur le câble 100 reste sensiblement constante indépendamment de la course des bras 210. Ceci permet d'assurer que la force de pincement varie peu en intensité même si le câble bouge ou travaille au cours du temps, par exemple si le câble 100 est déplacé, se dilate, se contracte ou se rétracte.

L'élément de rappel 220 peut par exemple être formé dans un matériau différent des bras 210. Par exemple, l'élément de rappel 220 est réalisé en acier, pour exercer une force de rappel continue dans le temps, tandis que les bras 210 sont réalisés en cuivre ou aluminium, qui sont des métaux à conductivité thermique importante, et qui participent ainsi à une évacuation de la chaleur efficace.

La figure 8 illustre un arrangement 300 de câble montrant des organes de pincement selon un exemple de réalisation dans lequel les organes de pincement 200 comportent chacun une surface 240 au niveau de leur base 220.

Cette surface 240 forme un radiateur thermique. La surface 240 peut être par exemple plane, et peut par exemple s'étendre selon une surface radiative rectangulaire.

La surface 240 radiative permet d'augmenter l'évacuation thermique de l'organe de pincement 200, et ainsi augmenter la chaleur évacuée du câble 100.

Quelle que soit la variante de réalisation, chaque organe de pincement 200 peut par exemple comprendre une surface 240 formant radiateur thermique.

La surface 240 radiative peut par exemple être munie d'un réflecteur optique solaire. Un tel réflecteur est particulièrement adapté à une utilisation de l'arrangement de câble à l'extérieur d'un engin spatial, de manière à éviter l'absorption de rayonnements solaires et éviter un réchauffement par les rayons solaires.

Quelle que soit la variante de réalisation, l'organe de pincement 200 peut par exemple être revêtu d'un revêtement possédant une émissivité déterminée. Cette émissivité est par exemple supérieure à l'émissivité de la gaine extérieure 110.

Ce revêtement comprend par exemple de l'oxyde d'aluminium. Ce type de revêtement peut être appliqué par exemple par oxydation anodique lorsque l'organe de pincement 200 est en aluminium.

En variante, le revêtement est par exemple une peinture présentant une forte émissivité.

Lorsque l'arrangement 300 de câble est destiné à une utilisation à l'extérieur d'un engin spatial, la peinture est par exemple choisie de sorte à avoir en outre une faible absorption solaire. Par exemple, une peinture blanche peut être choisie.

L'émissivité du câble est par exemple de 0.2. L'émissivité du revêtement est par exemple supérieure ou égale à 0.2, préférentiellement supérieure ou égale à 0.5, ou encore plus préférentiellement supérieure ou égale à 0.8.

De manière générale, le nombre d'organes de pincement 200 utilisés dans l'arrangement 300 de câble est choisi selon les besoins de la mission.

Un espacement entre deux organes de pincement 200 consécutifs sur le câble 100, correspond par exemple à 6 à 10 fois le diamètre du câble 100.

Comme illustré à la figure 9, l'organe de pincement peut également réaliser la fonction de maintien. L'organe de pincement comprend par exemple deux bras 20a et 20b. Les deux bras sont d'une part reliés par une extrémité à la structure 21 de l'engin spatial et d'autre part serrés l'un contre l'autre par leur autre extrémité, par un élément de serrage 23, afin de réaliser la fonction de pincement. Les bras peuvent par exemple présenter une élasticité. Les deux bras peuvent par exemple être fixés par une de leurs extrémités, à la structure de l'engin spatial. Selon une variante, un des bras peut par exemple être mobile en rotation par rapport à la structure 21 de l'engin spatial, l'autre bras étant fixé à cette structure.

L'élément de serrage est par exemple contraint par un ressort de serrage 22 et réalise une obstruction de l'espace entre les deux bras, recevant le câble, afin de réaliser la fonction de maintien. L'élément de serrage 23 se présente par exemple sous la forme d'une tige métallique reliée d'une part à un des bras 20b et d'autre part au ressort 22, tandis que le ressort 22 vient en appui sur l'autre bras 20a.

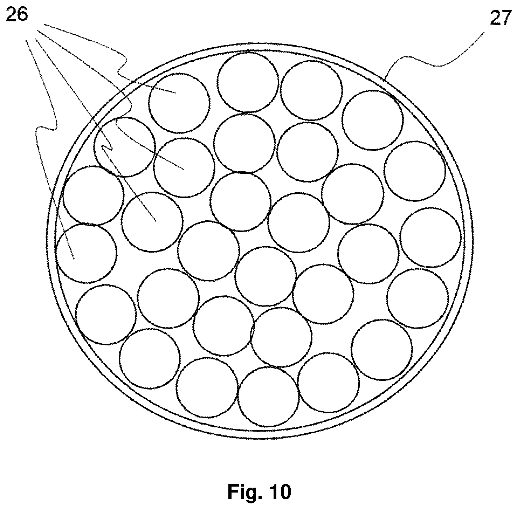

Comme illustré à la figure 10, le câble utilisé dans un arrangement de câble peut également comprendre, par exemple, plusieurs conducteurs longilignes 26 non électriquement isolés les uns des autres et rassemblés dans une unique gaine électriquement isolante 27. Là encore un ou plusieurs pincements permettront d'améliorer l'évacuation de la chaleur générée par résistance électrique dans le câble.

On rappellera que l'invention ne se limite pas aux exemples décrits et représentés.

## Revendications

1. Arrangement (300) d'au moins un câble (100) électrique, adapté à un environnement spatial, ledit câble étant de type comprenant une gaine (110) formant une enveloppe extérieure dudit câble, la gaine présentant un diamètre extérieur correspondant au diamètre du câble, l'arrangement de câble comprenant au moins un organe de pincement (200) du câble, **caractérisé en ce que** le câble comprend au moins une pluralité de conducteurs longilignes disposés dans la gaine, et **en ce que** l'organe de pincement du câble comprend un ressort configuré pour exercer, au moins une force de pincement (F) sur la gaine en au moins deux zones de pincement (150) de la gaine pour serrer transversalement les conducteurs longilignes et la gaine, la force de pincement étant déterminée pour créer, au niveau de chaque organe de pincement, une déformation de la section du câble créant des ponts par conduction thermique reliant de façon directe les conducteurs longilignes et une surface externe de la gaine, évacuant ainsi de la chaleur produite par une circulation de courant électrique dans ledit câble.

2. Arrangement (300) de câble (100) selon la revendication 1, dans lequel chaque conducteur longiligne comprend une âme électriquement conductrice et électriquement isolée par une gaine (121) électriquement isolante propre à chaque conducteur.

3. Arrangement (300) de câble (100) selon la revendication 1, comprenant en outre au moins un organe de maintien (310) du câble configuré pour maintenir le câble par rapport à un élément de structure d'un engin spatial (10), au moins temporairement au moment d'un lancement de l'engin spatial, chaque organe de pincement étant distinct dudit organe de maintien, l'organe de maintien (310) étant configuré pour exercer, sur le câble, hors phase de lancement, un effort de compression nul ou inférieur à un effort de compression négligeable déterminé ne causant pas de déformation de la section du câble.

4. Arrangement (300) de câble (100) selon l'une des revendications précédentes, dans lequel chaque organe de pincement est fixé, par une liaison mécanique, audit câble exclusivement.

5. Arrangement (300) de câble (100) selon la revendication 4, dans lequel chaque organe de pincement est relié à une tresse (25) thermique souple d'évacuation de la chaleur.

6. Arrangement (300) de câble (100) selon l'une quelconque des revendications précédentes, dans lequel chaque organe de pincement (200) exerce ladite force de pincement (F) en deux zones de pincement transversalement opposés sur ledit câble.

7. Arrangement (300) de câble (100) selon l'une quelconque des revendications précédentes, dans lequel chaque organe de pincement (200) comprend au moins deux bras (210) venant en appui sur la gaine au niveau desdites zones de pincement (150), et un élément élastique de rappel (220) exerçant un effort de rappel sur les bras pour qu'ils exercent ladite force de pincement (F).

8. Arrangement (300) de câble selon l'une quelconque des revendications précédentes, dans lequel l'au moins un organe de pincement (200) comprend une surface (240) formant radiateur thermique.

9. Arrangement (300) de câble (100) selon la revendication précédente, dans lequel la surface (240) formant radiateur thermique comporte un réflecteur optique solaire.

10. Arrangement (300) de câble (100) électrique selon l'une quelconque des revendications précédentes, dans lequel l'au moins un organe de pincement (200) est revêtu d'un revêtement possédant une émissivité déterminée.

11. Arrangement (300) de câble (100) électrique selon la revendication précédente, dans lequel l'émissivité du revêtement de l'organe de pincement est supérieure à l'émissivité de la surface externe de la gaine (110).

12. Arrangement (300) de câble (100) selon la revendication 10 ou 11, dans lequel l'émissivité du revêtement de l'organe de pincement est supérieure ou égale à 0.5, et préférentiellement supérieure ou égale à 0.8.

13. Arrangement (300) de câble (100) selon l'une quelconque des revendications 10 à 12, dans lequel le revêtement est réalisé à partir d'une peinture et/ou un traitement de surface.

14. Arrangement (300) de câble (100) selon l'une quelconque des revendications précédentes, dans lequel chaque organe de pincement (200) en appui sur la gaine du câble, s'étend, selon la direction longitudinale du câble, sur une longueur comprise entre 1 et 3 fois le diamètre du câble.

15. Arrangement (300) de câble (100) selon l'une quelconque des revendications précédentes, dans lequel l'arrangement comprend une pluralité d'organes de pincement (200) montés sur le câble.

16. Arrangement (300) de câble (100) selon la revendication précédente, dans lequel les organes de pincement sont séparés les uns des autres d'une distance, prise le long dudit câble, comprise entre 6 et 10 fois le diamètre du câble.

17. Engin spatial (10) comportant au moins un arrangement (300) de câble (100) selon l'une quelconque des revendications précédentes.

## Patentansprüche

1. Anordnung (300) mindestens eines elektrischen Kabels (100), geeignet für eine Weltraumumgebung, wobei das Kabel von dem Typ ist, der einen Mantel (110) umfasst, der eine Außenhülle des Kabels bildet, wobei der Mantel einen Außendurchmesser aufweist, der dem Durchmesser des Kabels entspricht, wobei die Kabelanordnung mindestens ein Klemmorgan (200) des Kabels umfasst, **dadurch gekennzeichnet, dass** das Kabel mindestens eine Vielzahl von länglichen Leitern umfasst, die in dem Mantel angeordnet sind, und dass das Klemmorgan des Kabels eine Feder umfasst, die so eingerichtet ist, dass sie mindestens eine Klemmkraft (F) auf den Mantel in mindestens zwei Klemmbereichen (150) des Mantels ausübt, um die Längsleiter und den Mantel quer zu klemmen, wobei die Klemmkraft bestimmt ist, um an jedem Klemmorgan eine Verformung des Kabelquerschnitts zu erzeugen, die Wärmebrücken schafft, die die länglichen Leiter direkt mit einer Außenfläche des Mantels verbinden, wodurch die durch einen elektrischen Stromfluss in dem Kabel erzeugte Wärme abgeführt wird.

2. Anordnung (300) eines Kabels (100) nach Anspruch 1, wobei jeder längliche Leiter einen elektrisch leitfähigen Kern umfasst, der durch einen für jeden Leiter eigenen elektrisch isolierenden Mantel (121) elektrisch isoliert ist.

3. Anordnung (300) eines Kabels (100) nach Anspruch 1, ferner umfassend mindestens ein Halteorgan (310) des Kabels, das so eingerichtet ist, dass es das Kabel in Bezug auf ein Strukturelement eines Raumfahrzeugs (10) mindestens vorübergehend zu dem Zeitpunkt eines Starts des Raumfahrzeugs hält, wobei jedes Klemmorgan von dem Halteorgan getrennt ist, wobei das Halteorgan (310) so eingerichtet ist, dass es außerhalb der Startphase eine Druckkraft auf das Kabel ausübt, die gleich Null oder geringer als eine bestimmte vernachlässigbare Druckkraft ist, die keine Verformung des Kabelquerschnitts verursacht.

4. Anordnung (300) eines Kabels (100) nach einem der vorhergehenden Ansprüche, wobei jedes Klemmorgan ausschließlich an diesem Kabel durch eine mechanische Verbindung befestigt ist.

5. Anordnung (300) eines Kabels (100) nach Anspruch 4, wobei jedes Klemmorgan mit einem flexiblen Wärmeableitungsgeflecht (25) verbunden ist.

6. Anordnung (300) eines Kabels (100) nach einem der vorhergehenden Ansprüche, wobei jedes Klemmorgan (200) die Klemmkraft (F) in zwei quer gegenüberliegenden Klemmbereichen auf das Kabel ausübt.

7. Anordnung (300) eines Kabels (100) nach einem der vorhergehenden Ansprüche, wobei jedes Klemmorgan (200) mindestens zwei Arme (210) umfasst, die an den Klemmbereichen (150) an dem Mantel anliegen, und ein elastisches Rückstellelement (220), das eine Rückstellkraft auf die Arme ausübt, damit diese die Klemmkraft (F) ausüben.

8. Anordnung (300) eines Kabels nach einem der vorhergehenden Ansprüche, wobei das mindestens eine Klemmorgan (200) eine wärmestrahlerbildende Oberfläche (240) umfasst.

9. Anordnung (300) eines Kabels (100) nach dem vorhergehenden Anspruch, wobei die wärmestrahlerbildende Oberfläche (240) einen solaroptischen Reflektor aufweist.

10. Anordnung (300) eines elektrischen Kabels (100) nach einem der vorhergehenden Ansprüche, wobei das mindestens eine Klemmorgan (200) mit einer Beschichtung mit einer bestimmten Emissivität beschichtet ist.

11. Anordnung (300) eines elektrischen Kabels (100) nach dem vorhergehenden Anspruch, wobei die Emissivität der Beschichtung des Klemmorgans höher ist als die Emissivität der äußeren Oberfläche des Mantels (110).

12. Anordnung (300) eines Kabels (100) nach Anspruch 10 oder 11, wobei die Emissivität der Beschichtung des Klemmorgans größer oder gleich 0,5 und vorzugsweise größer oder gleich 0,8 ist.

13. Anordnung (300) eines Kabels (100) nach einem der Ansprüche 10 bis 12, wobei die Beschichtung aus einem Lack und/oder einer Oberflächenbehandlung hergestellt ist.

14. Anordnung (300) eines Kabels (100) nach einem der vorhergehenden Ansprüche, wobei sich jedes Klemmorgan (200), das auf dem Mantel des Kabels aufliegt, in Längsrichtung des Kabels über eine Länge erstreckt, die zwischen dem 1- und 3-fachen des Durchmessers des Kabels liegt.

15. Anordnung (300) eines Kabels (100) nach einem der vorhergehenden Ansprüche, wobei die Anordnung eine Vielzahl von an dem Kabel angebrachten Klemmorganen (200) umfasst.

16. Anordnung (300) eines Kabels (100) nach dem vorhergehenden Anspruch, wobei die Klemmorgane entlang des Kabels um einen Abstand voneinander getrennt sind, der zwischen dem 6- und 10-fachen des Kabeldurchmessers liegt.

17. Raumfahrzeug (10) mit mindestens einer Anordnung (300) eines Kabels (100) nach einem der vorhergehenden Ansprüche.

## Claims

1. Arrangement (300) of at least one electrical cable (100), adapted to a spatial environment, said cable being of the type comprising a sheath (110) forming an outer jacket of said cable, the sheath having an outer diameter corresponding to the diameter of the cable, the cable arrangement comprising at least one member (200) for clamping the cable, **characterized in that** the cable comprises at least a plurality of longilineal conductors disposed in the sheath, and **in that** the member for clamping the cable comprises a spring configured to exert at least one clamping force (F) on the sheath in at least two clamping zones (150) of the sheath to transversely grip the longilineal conductors and the sheath, the clamping force being determined to create, at each clamping member, a deformation of the cross-section of the cable creating bridges by thermal conduction directly connecting the longlineal conductors and an outer surface of the sheath, thus evacuating heat produced by a circulation of electrical current in said cable.

2. Cable (100) arrangement (300) according to claim 1, wherein each longilineal conductor comprises an electrically conductive core electrically insulated by an electrically insulating sheath (121) specific to each conductor.

3. Cable (100) arrangement (300) according to claim 1, further comprising at least one member (310) for maintaining the cable configured to maintain the cable relative to a structural element of a spacecraft (10), at least temporarily at the time of a launch of the spacecraft, each clamping member being distinct from said maintaining member, the maintaining member (310) being configured to exert, on the cable, outside of the launch phase, a compression force null or less than a determined negligible compression force not causing deformation of the cross-section of the cable.

4. Cable (100) arrangement (300) according to any one of the preceding claims, wherein each clamping member is fastened, by a mechanical link, to said cable exclusively.

5. Cable (100) arrangement (300) according to claim 4, wherein each clamping member is connected to a flexible heat-removal thermal braid (25).

6. Cable (100) arrangement (300) according to any one of the preceding claims, wherein each clamping member (200) exerts said clamping force (F) in two transversely opposite clamping zones on said cable.

7. Cable (100) arrangement (300) according to any one of the preceding claims, wherein each clamping member (200) comprises at least two arms (210) bearing on the sheath at said clamping zones (150), and an elastic return element (220) exerting a return force on the arms so that they exert said clamping force (F).

8. Cable arrangement (300) according to any one of the preceding claims, wherein the at least one clamping member (200) comprises a surface (240) forming a thermal radiator.

9. Cable (100) arrangement (300) according to the preceding claim, wherein the surface (240) forming a thermal radiator comprises a solar optical reflector.

10. Electrical cable (100) arrangement (300) according to any one of the preceding claims, wherein the at least one clamping member (200) is coated with a coating having a determined emissivity.

11. Electrical cable (100) arrangement (300) according to the preceding claim, wherein the emissivity of the coating of the clamping member is greater than the emissivity of the outer surface of the sheath (110).

12. Cable (100) arrangement (300) according to claim 10 or 11, wherein the emissivity of the coating of the clamping member is greater than or equal to 0.5, and preferably greater than or equal to 0.8.

13. Cable (100) arrangement (300) according to any one of claims 10 to 12, wherein the coating is made from a paint and/or a surface treatment.

14. Cable (100) arrangement (300) according to any one of the preceding claims, wherein each clamping member (200) bearing on the sheath of the cable extends, according to the longitudinal direction of the cable, over a length of between 1 and 3 times the diameter of the cable.

15. Cable (100) arrangement (300) according to any one of the preceding claims, wherein the arrangement comprises a plurality of clamping members (200) mounted on the cable.

16. Cable (100) arrangement (300) according to the preceding claim, wherein the clamping members are separated from each other by a distance, taken along said cable, of between 6 and 10 times the diameter of the cable.

17. Spacecraft (10) comprising at least one cable (100) arrangement (300) according to any one of the preceding claims.
